# Europäisches Patentamt
## European Patent Office
## Office européen des brevets

(19)

(11) Numéro de publication: **0 155 907**
**B1**

(12)
# FASCICULE DE BREVET EUROPÉEN

(45) Date de publication du fascicule du brevet:
**25.01.89**

(51) Int. Cl.⁴: **G 01 N 27/26**

(21) Numéro de dépôt: **85810065.4**

(22) Date de dépôt: **19.02.85**

(54) **Appareil d'électrophorèse.**

(30) Priorité: **22.02.84 CH 853/84**

(43) Date de publication de la demande:
**25.09.85 Bulletin 85/39**

(45) Mention de la délivrance du brevet:
**25.01.89 Bulletin 89/4**

(84) Etats contractants désignés:
**AT BE CH DE FR GB IT LI LU NL SE**

(56) Documents cité:
**DE-A-3 039 647**
**GB-A-2 073 413**
**US-A-3 755 121**
**US-A-3 927 826**

**ANALYTICAL CHEMISTRY, volume 31, no. 5, mai 1959, pages 825-829; H.J. McDONALD et al.: "Centrifugal force in paper chromatography and electrophoresis"**

(73) Titulaire: **IntraCel Corporation, c/o Cottle Catford & Co. 17 High Street, Bridgetown (BB)**

(72) Inventeur: **Place, John F., 42, chemin de la Chevillarde, CH- 1208 Geneve (CH)**
Inventeur: **Bregnard, André, 35, avenue du Lignon, CH- 1219 Le Lignon (CH)**

(74) Mandataire: **Dousse, Blasco, 7, route de Drize, CH- 1227 Carouge/Genève (CH)**

EP 0 155 907 B1

## Description

La présente invention a pour objet un appareil et un procédé d'électrophorèse et, plus particulièrement, un appareil permettant la séparation, dans un milieu en couche mince, d'un mélange de composants susceptibles de se déplacer sélectivement dans ledit milieu rendu électroconducteur sous l'influence d'un potentiel électrique appliqué à ce milieu et pour effectuer, conjointement, la lecture de l'électrophérogramme résultant de celle-ci.

On sait que les techniques d'électrophorèse (appelée aussi parfois électrochromatographie) ainsi que les techniques apparentées telles que l'isotachophorèse, "l'isoelectric focusing" et d'autres, consistent à soumettre à un champ électrique créé par deux électrodes, une anode et une cathode, une solution électroconductrice de molécules ionisées positivement ou négativement de manière à provoquer la migration de celles-ci en direction de l'électrode de signe contraire à celui de leur charge. La vitesse d'électromigration des molécules chargées est liée à certains de leurs paramètres physico-chimiques, notamment leur masse, leur charge et leur constante de diffusion dans le milieu considéré, ce qui permet d'effectuer la séparation de diverses espèces chimiques en fonction justement des valeurs particulières des paramètres propres à ces diverses espèces. On obtient ainsi, en fin d'opération, un chromatogramme (électrophérogramme) où, après développement, les diverses espèces de molécules ainsi séparées apparaissent sous forme de zones ou de points (spots) successifs plus ou moins diffus selon l'efficacité de la séparation.

Au point de vue opérationnel, la séparation électrophorétique permet, soit d'identifier analytiquement les composants d'un mélange, soit, à plus grande échelle, la purification desdits composants et leur obtention en quantité pondérable à des fins préparatives. Dans ce dernier cas, il est bien évident que l'électrophérogramme devra présenter un degré de stabilité physique suffisant pour qu'on puisse le manipuler et isoler les unes des autres les zones caractéristiques de manière à extraire de celles-ci chacun des composants qu'on désire obtenir.

Dans la pratique habituelle de séparation des molécules organiques chargées, telles que des protéines ou des acides nucléiques, il est convenu d'utiliser des milieux d'électrophorèse constitués par des gels (agarose, amidon, polyacrylamide, etc..) plus ou moins réticulés suivant les besoins. De tels gels ont la propriété de diminuer les mouvements de convection dans le liquide d'électrophorèse et d'améliorer le fractionnement des molécules à séparer en fonction de leur taille et de leur encombrement par rapport aux mailles du réseau constitué par le gel, ainsi qu'en fonction de leurs propriétés d'affinité de surface par rapport à celles des molécules de celui-ci.

La préparation des gels utilisés en électrophorèse est généralement effectuée par moulage, dans un moule à faces planes, d'un liquide qu'on introduit dans le moule et qu'on laisse ensuite durcir ou dont on provoque le durcissement par polymérisation. On a récemment décrit dans la demande EP-A-0 138 763 publiée le 24.04.1985 certaines techniques de préparation de tels gels, notamment celles relatives à des gels en couches très minces, l'utilisation de gels de très faible épaisseur améliorant en effet l'efficacité de la séparation des composants d'un mélange.

Ainsi, le gel réalisé suivant les techniques habituelles se présente sous forme d'une bande ou lame mince de milieu électroconducteur rigide ou semi-rigide à l'extrémité (ou à un endroit quelconque privilégié) duquel on dépose, par exemple au moyen d'une pipette, l'échantillon du mélange dont on veut effectuer la séparation. Cette addition se fait souvent par l'intermédiaire d'une portion spéciale de gel ("stacking gel") qui permet une répartition préliminaire des composants à séparer suivant des zones de départ très minces et, partant, très concentrées en chaque constituant, cette répartition se faisant avant que ne débute la migration électrophorétique proprement dite.

Par ailleurs, pour la mise en oeuvre de celle-ci suivant la pratique habituelle, on met en contact les extrémités du gel avec des solutions tampon conductrices, elles-mêmes reliées aux pôles d'une source de courant électrique par l'intermédiaire d'électrodes appropriées, le tout de manière que le gel soit soumis au champ électrique désiré. On fait alors circuler le courant dans le gel le temps voulu, ce courant et ce temps étant maintenus par des moyens de contrôle dans des limites bien définies. On maintient de façon similaire les conditions de température et d'humidité; le contrôle exact de ces paramètres étant, en effet, essentiel pour assurer une bonne reproductibilité opératoire.

Lorsque l'électrophorèse est terminée, on procède à la fixation chimique du gel et des composants analytiques qu'il contient, par exemple par le formaldéhyde ou l'acide trichloracétique, puis on ajoute un colorant approprié qui se fixe sur ces composants, on lave le gel de l'excès de colorant afin de faire ressortir les composants ainsi marqués et, après séchage, on soumet l'électrophérogramme ainsi "développé" aux différents examens et mesures permettant d'identifier les composants séparés et de déterminer leurs proportions relatives dans le mélange initial (distances de migration, densité de la coloration et autres).

Dans la pratique courante, ces différentes opérations et manipulations s'effectuent séparément et de nombreux fabricants fournissent actuellement sous forme de kits élaborés et sophistiqués, les divers accessoires et composants nécessaires à l'application des techniques électrophorétiques. Ainsi, le document US-A-3 735 121 décrit un dispositif en forme de kit pour effectuer des analyses par électrophorèse. Une des formes d'exécution de ce dispositif comprend un récipient discoïde comprenant deux zones annulaires électriquement conductrices, une zone centrale et une zone périphérique, reliées l'une à l'autre par des "ponts" remplis d'un gel électroconducteur. Ce dispositif comprend également un couvercle qu'on applique sur ledit récipient de manière qu'on puisse introduire par des ouvertures de ce couvercle qui coïncident avec lesdits "ponts" des échantillons d'analyse, celle-ci étant alors effectuée, suivant les moyens habituels, en appliquant une tension aux extrémités de ces "ponts" par l'entremise desdites zones conductrices.

Un article scientifique de Analytical Chemistry 31 (1959), 885 - 29 décrit l'application de la force centrifuge simultanément à celle de l'électrophorèse. En effet, cet article décrit un dispositif rotatif servant de support à un milieu de séparation électrophorétique (papier filtre), ce milieu étant ensemmencé dans sa zone centrale et une tension électrique étant appliquée à sa périphérie de manière que les substances à séparer migrent en direction de celle-ci suivant une trajectoire radiale. Par mise en rotation du dispositif, les substances en déplacement sont soumises à un champ de gravitation centrifuge dirigé à angle droit par rapport à cette trajectoire, celle-ci tendant alors à s'incurver.

Par ailleurs, le document GB-A-2 073 413 décrit un système rotatif de "lecture" de chromatogrammes ou d'électrophérogrammes. Ce système comporte un plateau discoïde tournant comprenant, disposés annulairement et concentriquement, une série de chromatogrammes dont les "taches" sont mises successivement en regard, par rotation pas à pas du plateau, d'un dispositif de lecture optique que porte un bras à mouvement tangentiel par rapport au plateau. Ce dispositif n'est cependant prévu que pour effectuer la "lecture" des chromatogrammes et non pour réaliser ceux-ci conjointement.

Le document US-A-3 927 826 divulgue un dispositif centrifuge pour préparer des pastilles utilisables comme milieux d'électrophorèse dans des conditions particulièrement bien reproductibles. Cependant, les techniques mises en oeuvre dans les procédés d'électrophorèse faisant partie de l'art antérieur requièrent beaucoup d'expérience et d'habilité de la part des opérateurs.

En conséquence, on cherche actuellement à développer des appareils d'électrophorèse à fonctionnement plus ou moins automatique, grâce auxquels les différentes manipulations décrites plus haut peuvent être effectuées successivement sans (ou avec un minimum) d'interventions manuelles extérieures. Ainsi, la Société Olympus a récemment commercialisé un appareil automatique d'électrophorèse pour l'analyse des sérums sanguins. OLYMPUS "HITE SYSTEM" Catalogs No MIO1E-06795; MIO8E-0581B Olympus Optical Co, Ltd. Tokyo, Japan. Cet appareil comprend des moyens automatiques pour successivement appliquer un échantillon de serum, c'est-à-dire un mélange de composants polypeptidiques séparables électrophorétiquement, sur une membrane constituée d'un gel d'acétate de cellulose, des moyens pour mettre en contact cette membrane avec une source de courant et la soumettre à un potentiel électrique permettant la séparation électrophorétique des composants de l'échantillon, des moyens pour développer et fixer, par coloration, lavage et séchage, l'électrophérogramme ainsi obtenu et des moyens optiques (densitomètre) pour analyser et mesurer celui-ci et ainsi identifier et déterminer la concentration des composants dans l'échantillon. Ainsi, le document DE-A3 030 647 décrit-il un dispositif pour la manipulation automatique d'échantillons dans un tel appareil d'électrophose automatisé.

L'appareil constituant l'objet de la présente invention, et défini à la revendication 1, diffère de l'état de la technique susmentionné particulièrement par les points suivants: le milieu d'électrophorèse est un gel en couche mince (par exemple gel de polyacrylamide, d'agarose, de gélatine et autres collagène ou polymères hydrophiles), de préférence logé dans la cavité d'un moule servant pour le moulage de tels gels et, d'autre part, les moyens pour analyser et mesurer l'électrophérogramme, après achèvement et développement de celui-ci, sont remplacés par des moyens pour détecter et mesurer le taux de déplacement des composants en voie de séparation ainsi que, de préférence, leur densité optique au cours de l'opération d'électrophorèse elle-même et/ou après que celle-ci soit achevée.

On notera aussi que, dans le présent appareil, on utilise de préférence des gels enfermés dans un moule présentant l'aspect d'une plaque mince aux formes symétriques, notamment d'un disque plan, comportant une ouverture centrale et, ménagés dans son épaisseur et remplis dudit gel, un ou plusieurs compartiments ou cavités allongés en forme de canal s'étendant radialement de cette ouverture centrale à la périphérie du moule et dont les ouvertures, s'ouvrant respectivement sur les tranches intérieure et extérieure du moule, permettent de relier les extrémités du gel chacune à un pôle distinct d'une source de courant par des moyens de contact appropriés de manière à soumettre ce gel audit potentiel électrique.

Le procédé mettant en oeuvre le présent appareil est décrit à la revendication 14.

L'invention sera mieux comprise en se référant aux dessins annexés, dans lesquels:

la fig. 1 est une vue schématique montrant les principaux organes fonctionnels de l'appareil d'électrophorèse selon l'invention;

la fig. 2a représente, en perspective, une partie d'un moule utilisable dans l'appareil de la fig. 1;

la fig. 2b est une coupe d'un tel moule selon l'axe A - A de la fig. 2a;

la fig. 3 est une coupe selon l'axe B - B de la fig. 1;

la fig. 4 est une élévation, avec coupe partielle, d'un détail de l'appareil de la fig. 1;

la fig. 5 est une coupe selon C - C de la fig. 1 dans une autre position de ses éléments;

la fig. 6 est une vue similaire à celle de la fig. 5 d'une variante d'exécution.

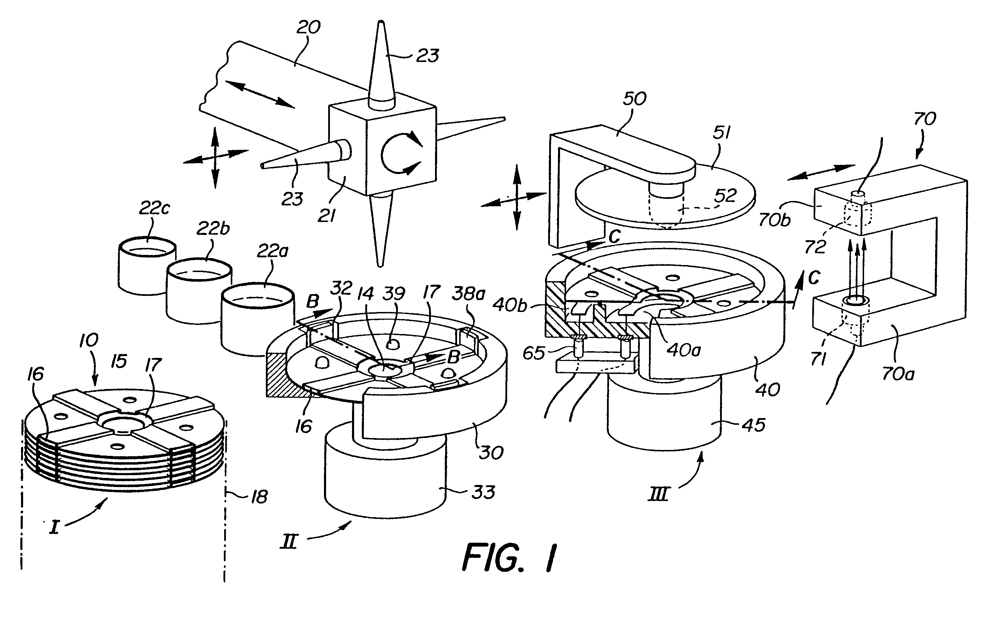

L'appareil représenté à la fig. 1 comprend, montés sur un bâti non représenté, trois postes ou emplacements de travail indiqués au dessin par les chiffres romains I à III. Le poste I correspond à une position de stockage de moules 10, le poste II correspond à une position de travail suivant laquelle l'échantillon dont les composants sont à séparer est appliqué au gel contenu dans un moule 10 et le poste III correspond à une position de travail dans laquelle s'effectue l'électrophorèse proprement dite. On notera au passage qu'au poste II peut également correspondre le remplissage du moule par un liquide pour la fabrication du gel, cette opération intervenant avant l'application à celui-ci de l'échantillon à analyser comme on le verra plus loin.

Cet appareil comprend un bras mobile 20 muni d'une tête 21 de distribution de réactifs liquides, emmagasinés dans des réservoirs 22a, 22b et 22c, et un bras de transfert 50 pour convoyer les disques 10 d'un poste de travail à l'autre.

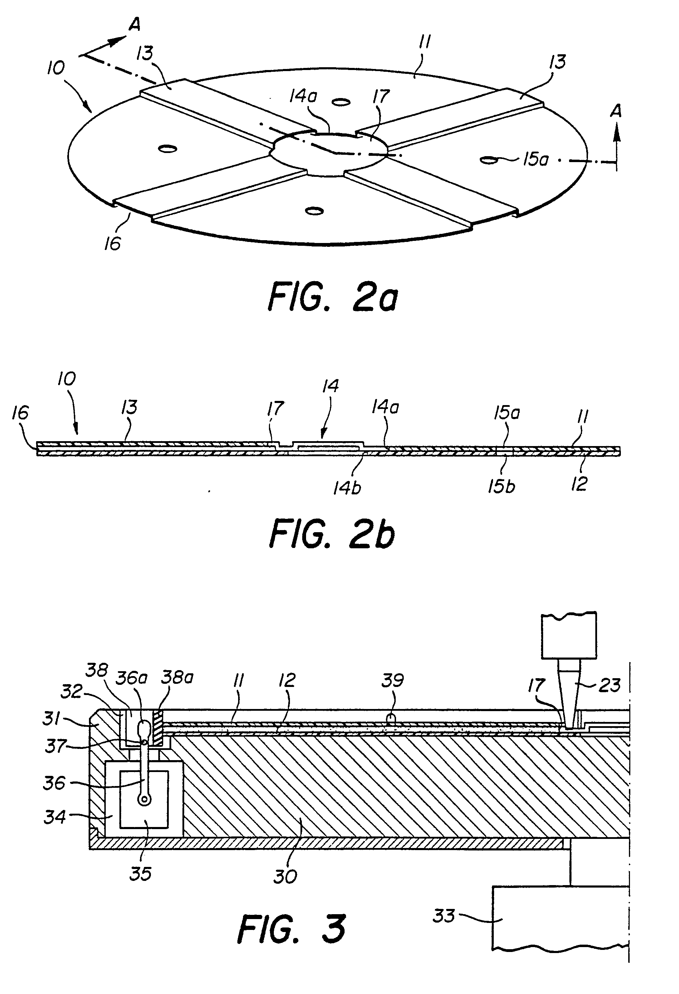

Dans ce qui suit, on se référera également aux figs 2 à 5.

Chaque moule 10 (fig. 2b) est formé par assemblage de deux disques superposés 11 et 12. Le disque supérieur 11 (fig. 2a) se compose d'une feuille de plastique perméable aux UV, matricée de manière à former quatre bossages 13 qui apparaissent en relief au dessin. Le disque présente également une ouverture centrale 14a, de forme circulaire et des passages 15a, de repérage, permettant d'orienter angulairement le moule dans ses diverses positions de travail, comme on le verra plus loin.

Le disque inférieur 12 est plan et présente une ouverture centrale 14b, de diamètre inférieur à celui de l'ouverture 14a, et des passages 15b disposés au droit des passages 15a du disque 11. Ces deux disques sont coaxiaux et soudés ou collés l'un à l'autre par leur tranche externe pour constituer le moule 10, l'espace compris entre le disque 12 et la face interne de la paroi délimitant les bossages 13 du disque 11 constituant autant de compartiments de moulage présentant la forme de canaux radiaux à deux ouvertures, l'une, 16, apparaissant sur la tranche externe du moule 10, l'autre, 17, sur la tranche interne de celui-ci.

Bien entendu, d'autres solutions constructives du moule 10 sont aussi possibles: en particulier les cavités de moulage pourraient être fraisées dans l'épaisseur d'une plaque unique.

Les moules 10 vides sont empilés au poste I, dans un distributeur cylindrique 18, celui se trouvant en tête de pile étant disponible et susceptible d'être transféré de ce poste I au poste II lors du fonctionnement de l'appareil grâce à un dispositif décrit ci-après. Lorsque le moule supérieur de la pile de moules que contient le distributeur 18 sera transféré au poste II, le moule qui le suit et qui occupe une position immédiatement inférieure au précédent prendra la place du premier et sera ainsi prêt à être utilisé le moment venu.

Le poste de travail II comprend un plateau circulaire 30 en métal ou en matière plastique, tel l'aluminium et le PVC, est destiné à recevoir un moule 10, et est pourvu d'un rebord annulaire 31 comportant quatre encoches équidistantes 32 donnant chacune accès à un logement 34 dans lequel est placé (fig. 3) un dispositif servant à obturer l'ouverture 16 de chaque canal du moule 10 faisant face à une encoche 32 correspondante, lorsque le moule entraîné par le plateau est mis en rotation par un moteur 33. Comme on le voit, ce dispositif comprend une masselotte 35 fixée de façon articulée sur un bras 36 dont l'extrémité 36a est articulée autour d'un axe 37 et porte un plot 38 sur lequel est fixé un tampon étanche 38a destiné précisément à obturer l'ouverture 16.

Le plateau 30 présente en outre quatre ergots 39, de diamètre correspondant sensiblement à celui des passages 15a et 15b du moule 10 et permettant, lorsqu'un moule est placé sur le plateau 30 (fig. 3), non seulement de fixer la position angulaire de celui-ci mais encore d'en assurer l'entraînement en rotation par ce plateau.

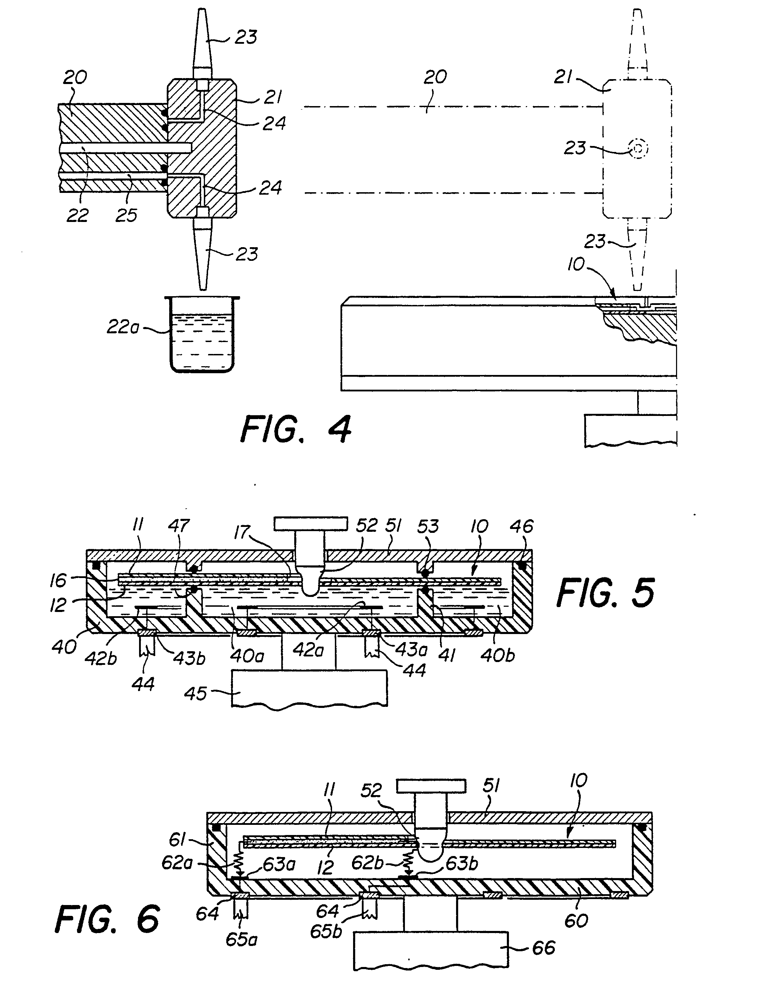

Le bras 20 peut être déplacé par un dispositif de commande, non représenté, dans les trois directions de l'espace, c'est-à-dire latéralement, de bas en haut et dans le sens axial (fig. 1). Ce bras 20 comporte un axe 22 (fig. 4) entraîné angulairement par un moteur pas à pas, non représenté, à l'extrémité libre duquel est montée pivotante la tête 21 portant quatre pipettes 23 devant permettre tant le prélèvement que la distribution de liquides aspirés au préalable des réservoirs 22a, 22b ou 22c. Ces pipettes sont reliées individuellement, au fur et à mesure du déplacement angulaire de la tête 21, à un conduit 25 connecté à des moyens d'aspiration et de refoulement, non représentés, sous contrôle d'un dispositif de commande général de l'appareil qui sera évoqué plus loin. Ces moyens peuvent par exemple être constitués par une ou plusieurs pompes aptes à créer, au moment voulu, une dépression ou une pression permettant d'aspirer dans la pipette une quantité donnée de liquide ou de délivrer ce liquide en un lieu et à un moment choisis en fonction de la position du bras 20 et de la tête 21.

Le bras de transfert 50 est mobile en translation et de haut en bas, ce qu'indiquent schématiquement les flèches apparaissant au côté de ce bras (fig. 1). Il est entraîné, sous contrôle du dispositif de commande générale de l'appareil, par des organes mécaniques traditionnels non représentés et porte, à son extrémité libre, un disque 51 et un embout axial 52, gonflable élastiquement et dont le diamètre externe, en position dégonflée, est légèrement inférieur à celui du passage central 14 que présente chaque moule 10. Le bras 50 porte également des moyens pour gonfler l'embout élastique 52 à volonté, ceci de manière à assurer une liaison momentanée entre le bras 50 et le moule 10 à saisir, l'embout 52 pénétrant, lorsqu'il est dégonflé, dans le passage central 14 du moule et retenant celui-ci en contact avec le disque 51 après gonflage. Il est donc aisé, en coordonnant les déplacements du bras 50 avec le gonflage et le dégonflage de l'embout 52, de saisir le moule dans l'une des positions I à III de travail de l'appareil de le transférer et de le déposer dans une autre de ces positions de travail.

En variante, au lieu de l'embout 52, on pourrait prévoir un dispositif préhenseur de nature différente, coopérant avec le disque 10, par exemple un dispositif à baïonnette s'engageant dans un filetage idoine du trou 14.

Le poste de travail III comporte une cuve cylindrique en matière isolante 40 divisée en deux compartiments coaxiaux 40a et 40b, par une cloison annulaire 41 et contenant un électrolyte tampon (fig. 5). Le compartiment central 40a renferme une électrode annulaire 42a reliée électriquement à un collecteur annulaire 43a. De même le compartiment 40b contient-il une électrode annulaire 42b reliée à un collecteur 43b. Un contact électrique glissant est assuré par des charbons 44 frottant sur les collecteurs 43a et 43b et reliés à des pôles distincts d'une source de courant électrique, non représentée. La cuve 40 est cinématiquement solidaire d'un moteur d'entraînement 45.

Le bord de la cuve 40 est pourvu d'un joint d'étanchéité circulaire 46 sur lequel vient s'appliquer, de façon étanche, le disque 51 du bras 50 lorsque celui-ci, sur commande du dispositif de contrôle général de l'appareil, dépose un moule 10 dans cette cuve. Ce disque 51 comporte, logé dans une rainure de sa face inférieure, un joint annulaire 53 qui fait pression sur le moule 10, celui-ci étant ainsi serré entre ce joint 53 et un autre joint annulaire 47 que porte la cloison 41. Les compartiments 40a et 40b sont donc, de par la présence du moule 10, séparés de façon étanche l'un de l'autre et les électrolytes qu'ils contiennent isolés électriquement à l'exception de la liaison constituée par le milieu d'électrophèse contenu dans les canaux du moule 10, une extrémité 16 de chaque canal étant en contact avec l'électrolyte du compartiment 40b et l'autre extrémité 17 étant en contact avec l'électrolyte du compartiment 40a. Il est bien entendu que, dans une telle situation, l'embout 52 est dégonflé de manière à ne pas interrompre la liaison électrique précitée entre les compartiments 40a et 40b.

Dans la variante du dispositif de travail du poste III illustré en fig. 6, celui-ci comporte un disque 60, à fond plat, muni d'un bord périphérique 61 sur lequel vient se poser le disque 51 portant un moule 10 grâce à l'embout 52 à l'état gonflé, le moule étant élastiquement solidaire du disque. Dans cette variante, les canaux du moule comportent, enfichés dans leurs extrémités 16 et 17, des plaquettes métalliques plissées 62a, respectivement 62b, faisant contact souple avec des électrodes annulaires 63a et 63b alimentés en énergie électrique, comme dans la forme d'exécution précédente, par l'intermédiaire de balais ou charbons 65a et b reliés à une source de courant, non représentée, en contact avec des collecteurs annulaires 64. Le disque 60 est cinématiquement solidaire d'un moteur d'entraînement 66.

L'appareil décrit comporte en outre un dispositif ou sonde électrooptique destiné à observer et à mesurer, au cours de l'électrophorèse, le déplacement de chacun des composants du mélange soumis à la séparation. Ce dispositif (fig. 1) présente une armature 70 en forme de U, dont un bras inférieur 70a porte une source de rayonnement 71 et un bras supérieur 70b porte un détecteur 72. Ce dispositif 70 peut être déplacé transversalement par des moyens, non représentés, commandés par le dispositif de contrôle général de la machine, pour l'amener à portée de la cuve 40, ces bras enserrant cette cuve de part et d'autre de manière que le rayonnement émis par la source 71 balaye progressivement toute la longueur d'un canal radial du moule 10 soumis à l'électrophorèse et que le détecteur 72 perçoive simultanément un signal caractéristique des composants répérés. Le type de ce rayonnement est choisi dans des longueurs d'onde convenables pour qu'il soit absorbé par les composants du mélange soumis à la séparation. En pratique, les rayons UV sont utilisables mais, suivant le type de composants, d'autres rayonnements sont également possibles: visibles, rayons X et autres. Bien entendu, la matière de la cuve 40, du moule 10 et du disque 51 doit être perméable au rayonnement utilisé (matière plastique telle que polycarbonate, lucite, PVC ou autre). Le détecteur 72 traduit électriquement les variations d'intensité lumineuse perçues au passage de la sonde 70 sous forme d'impulsions qui sont transmises au centre de contrôle de l'appareil.

L'appareil représenté comprend encore des organes de contrôle servant à coordonner les mouvements des divers composants décrits et à automatiser le fonctionnement global de la machine. De tels organes sont connus en soi de l'homme de métier qui les adaptera et les règlera en fonction du mode opératoire choisi de cas en cas et du type des résultats recherchés. Ces organes comprennent notamment une unité centrale de commande et de calcul, par exemple un microprocesseur, accompagné des périphériques habituels tels que terminal, dispositif d'affichage, mémoires programmables ou non, base de temps et autres, et des interfaces nécessaires tels que circuits amplificateurs, décodeurs et intégrateurs des signaux fournis par le détecteur 72, circuits commandant l'asservissement des diverses fonctions mécaniques mises en jeu, du convertisseur de données analogiques en données digitales, etc..

Par ailleurs, l'appareil pourra également comporter des détecteurs de positionnement des divers organes mobiles afin de contrôler (et éventuellement corriger) le mouvement et la position de ceux-ci dans toutes les phases opératoires de l'appareil. L'appareil comprendra également des sondes mesurant les conditions d'électrophorèse, c'est-à-dire la température et l'humidité régnant dans l'enceinte 40 ainsi que les conditions électriques (voltage, intensité de courant) les signaux fournis par ces sondes étant également transmis à l'unité centrale de commande à des fins de mémorisation, d'affichage, de contrôle ou de correction automatique par rétroaction. Tous ces organes sont, en soi, connus de l'homme de métier et ne figurent pas au dessin afin de ne pas le surcharger de détails non essentiels à la compréhension de l'invention.

Tous les organes cités peuvent être assemblés et réalisés à partir d'éléments commerciaux sans nécessiter d'activité inventive particulière et adaptés, suivant les besoins, aux différents types d'opérations et de composants chimiques à étudier par électrophorèse.

On indiquera maintenant comment fonctionne le présent appareil en en décrivant successivement les différentes phases opératoires.

Avant la mise en marche, le distributeur 18 a été chargé d'un paquet de moules 10 vides et, dans la première phase de travail, le bras 50, piloté par l'unité centrale de contrôle prélève un premier moule grâce à l'embout 52 et le dépose sur le plateau 30 où il est positionné de la manière requise grâce aux ergots 39 pénétrant dans les passages 15 du moule.

Le bras 20 se déplace alors en regard du réservoir 22 approprié (par exemple 22a) et, sous l'action de l'unité centrale de commande, prélève, par une pipette 23, une quantité dosée d'un monomère (par exemple une solution aqueuse connue d'acrylamide), cette quantité étant, après déplacement du bras 20 en regard du centre 14 du moule (voir fig. 4), lentement refoulée par la pipette dans l'ouverture 17 de chacun des quatre canaux radiaux de ce moule. Auparavant, le plateau 30 a été mis en rotation grâce au moteur 33 à une vitesse suffisante pour que la force centrifuge engendrée provoque la fermeture de l'ouverture extérieure 16 de chaque canal du moule (par l'entremise du tampon 38 pressé par le bras 36a actionné par la masselotte) et force le liquide délivré par la pipette 23 à pénétrer radialement dans les cavités du moule de manière qu'il s'accumule peu à peu et le remplisse sur une longueur prédéterminée de chaque cavité. La demande EP-A-138 763 a déjà décrit les avantages présentés par l'utilisation de la force centrifuge pour remplir les moules pour gels en couches minces destinées à l'électrophorèse, l'un de ces avantages étant la faculté d'éliminer rapidement les bulles d'air et autres inhomogénéités piégées dans le liquide.

Le moule étant rempli de la manière désirée (généralement les 7/8 ou 9/10 de son volume), on fait en sorte que son contenu se prenne en gel, soit en attendant le temps voulu, si la solution contient les ingrédients nécessaires au durcissement, soit par irradiation, comme décrit dans la demande EP-A-138 763.

Le gel durci, on procède à l'application de l'échantillon grâce à une seconde des pipettes 23 de la tête 21, la technique opératoire étant, à peu de chose près, identique à celle du remplissage du moule, c'est-à-dire, pompage par la pipette d'une quantité mesurée de mélange à séparer à partir d'un récipient 22, par exemple 22b, addition au gel, soit par l'ouverture 17 comme déjà décrit, soit en variante par une ouverture spéciale ménagée dans le moule en deça de l'extrémité 17, par exemple telle que décrite dans la demande EP-A-138 763.

Bien entendu l'appareil peut comprendre des réservoirs de liquide additionnels en sus des réservoirs 22a, b et c représentés au dessin, de tels réservoirs supplémentaires pouvant contenir d'autres réactifs, échantillons ou liquides de rinçage des pipettes par exemple.

Après incorporation de l'échantillon à analyser (le moule étant mis en rotation pour empêcher ledit échantillon de s'échapper), on procède au remplissage final du moule par une solution précurseur de gel afin d'emprisonner l'echantillon. On peut, pour cela, utiliser une solution identique à celle ayant fourni le corps principal du gel ou une solution indépendante (par exemple stockée dans un troisième récipient 22c) fournissant, après durcissement, un "stacking" gel mentionné plus haut. Il est évident que, si on a introduit le mélange à séparer dans une ouverture spéciale du moule 10, l'introduction d'une dernière portion de gel n'est pas nécessaire.

On notera que, dans le présent mode opératoire, les différents compartiments du moule 10 ont été utilisés simultanément, chacun d'entre eux ayant subi le même traitement. Il est bien évident que, en variante, on pourrait incorporer des échantillons différents de compartiment à compartiment. On préfère cependant opérer comme indiqué, la possibilité de réaliser quatre opérations identiques en même temps étant un gage de reproductibilité des mesures.

Une fois le moule 10 rempli et l'échantillon à analyser incorporé, l'appareil prélève ce moule du plateau 30 et le conduit automatiquement dans la cuve 40 par l'intermédiaire du bras 50, le disque 51 jouant le rôle de couvercle de la cuve 40 assurant l'étanchéité de la cuve 40 et le maintien des conditions choisies pour réaliser l'électrophorèse.

Celle-ci intervient sur commande de l'unité centrale de contrôle qui règle automatiquement les conditions de travail: la température par le moyen d'un corps de chauffe incorporé au fond de la cuve 40 (non représenté) et les paramètres électriques (voltage et intensité). Ces paramètres sont, bien entendu, enregistrés par des sondes appropriées de l'appareil et, affichés par le dispositif d'affichage non représenté, et constituent une partie des informations utiles transmises à l'opérateur au cours de l'analyse. Les extrémités 16 et 17 de la cavité du moule étant en contact électrique, respectivement, avec les solutions conductrices des compartiments 40a et 40b et celles-ci étant mises sous tension grâce aux électrodes 42a et 42b reliées à une source de courant commandée par l'unité centrale de contrôle, le champ électrique s'établit dans le gel du moule et les composants de l'échantillon se déplacent dans le gel sous l'influence de la force électrophorétique. Pendant cette opération, la cuve 40 peut être maintenue immobile ou en rotation. Dans ce dernier cas, la force centrifuge engendrée peut exercer un effet particulier sur le mode de migration des différents composants. Elle peut notamment accélérer ou retarder le mouvement de certains des composants au profit d'autres composants ou compenser certains effets néfastes dus à l'électroendosmose.

Pendant que se déroule l'électrophorèse (et bien entendu à la fin de celle-ci), l'arnature 70 si déplace en mouvement radial tangentiel par rapport au moule de façon à explorer systématiquement et progressivement, la totalité de la plage du moule soumise à l'électrophorèse. Le rayonnement d'excitation en provenance de la source 71 est intercepté, tour à tour, par les différents composants en voie de séparation (où à la fin de celle-ci) et le signal ainsi détecté par le détecteur 72 est transmis à l'unité centrale de contrôle qui en effectue le traitement électronique et en enregistre et affiche les résultats sous forme de données d'intensité d'absorption et de vitesse de déplacement. Il est donc possible à tout moment de suivre en détail la marche de l'électrophorèse au moyen du présent appareil, les données enregistrées et affichées permettant de connaître la nature des composants (leur structure chimique dans certains cas) et leur concentration originale dans l'échantillon.

**Revendications**

1. Appareil pour séparer, par électrophorèse en couches minces, les composants d'un mélange susceptibles de se déplacer sélectivement dans un milieu électroconducteur sous l'influence d'un potentiel électrique appliqué à ce milieu et pour effectuer, conjointement, la lecture de l'électrophérogramme résultant de celle-ci, cet appareil comprenant essentiellement:

a) des moyens automatiques (20, 21) pour incorporer ledit mélange audit milieu, celui-ci étant constitué d'un gel de forme discoïde contenu dans la cavité de moulage d'un moule (10) pour couches minces de polymère;

b) des moyens automatiques (42, 43, 62, 63) pour relier deux portions distinctes de ce gel aux pôles (65) d'une source de courant, et,

c) des moyens automatiques mobiles (70) se déplaçant en regard du moule (10) de manière à explorer la totalité de la plage de gel soumise à l'électrophorèse, ces moyens comprenant, d'une part, une source d'un rayonnement (71) qu'on dirige sur lesdits composants soumis à l'électrophorèse et, d'autre part, un capteur (72) de ce rayonnement après interaction avec lesdits composants, le rayonnement ainsi recueilli par ce capteur fournissant, sous forme de signal électrique, l'information de lecture désirée.

2. Appareil suivant la revendication 1, caractérisé par le fait que le moule (10) présente une forme générale discoïdale, qu'il présente un trou (14) en son centre et comporte, ménagée dans son épaisseur et remplie dudit gel, au moins une cavité (15) s'étendant du centre à la périphérie du moule et dont les ouvertures (16, 17), débouchant respectivement sur la tranche intérieure et extérieure du moule, sont destinées à être reliées à ladite source de courant de manière à établir ledit potentiel électrique entre les extrémités du gel.

3. Appareil suivant les revendications 1 ou 2, caractérisé par le fait qu'il comprend des moyens (50) pour, successivement, transporter le moule d'un lieu de stockage (I) à un second emplacement (II) de l'appareil où s'effectue l'incorporation du mélange à séparer au gel d'électrophorèse, puis à un troisième emplacement (III) où s'effectue la séparation électrophorétique proprement dite.

4. Appareil suivant la revendication 1, caractérisé par le fait qu'il comprend, en addition, des moyens pour mouler in situ le gel dans le moule, ces moyens comportant:

i. un moteur (33) pour mettre le moule en rotation;

ii. un distributeur (21) de liquide pour introduire, par l'ouverture centrale du moule, un monomère ou autre précurseur liquide du gel de manière que ce liquide se déplace et remplisse le moule sous l'effet de la force centrifuge due à la rotation, sa conversion en gel intervenant après remplissage de celui-ci.

5. Appareil suivant la revendication 4, caractérisé par le fait que ledit distributeur de liquide est également prévu en tant que moyens (a) pour incorporer l'échantillon à séparer dans le gel.

6. Appareil suivant la revendication 5, caractérisé par le fait que ces moyens (a) comprennent un bras mobile (20) dans au moins deux directions de l'espace équipé de pipettes calibrées (23) et agencées pour, tour à tour, aspirer et délivrer une dose connue de liquide.

7. Appareil suivant la revendication 1, caractérisé par le fait que les moyens (b) pour relier le gel à la source de courant électrique consistent en des solutions d'électrolyte tampon que contiennent, respectivement, deux zones coaxiales (40a, 40b), l'une centrale et l'autre périphérique d'un bac (40) dans lesquels le moule est immergé.

8. Appareil suivant la revendication 1, caractérisé par le fait que les moyens (b) sont constitués de plaquettes métalliques (62a, 62b) dont la tranche épouse la section des ouvertures des cavités du moule et introduites dans celles-ci, ces plaquettes étant reliées à la source de courant.

9. Moule convenant à l'appareil suivant la revendication 1, caractérisé par le fait qu'il est formé par assemblage de deux plaques discoïdales (11, 12), de matière perméable à des rayonnements de longueur d'onde déterminée, au moins l'une de ces plaques présentant au moins une rainure (13) ménagée sur sa face en contact avec l'autre plaque.

10. Moule suivant la revendication 9, caractérisé par le fait que ladite rainure est obtenue par fraisage.

11. Moule suivant la revendication 9, caractérisé par le fait que ladite rainure est délimitée par un bossage obtenu par formage de la plaque correspondante.

12. Procédé d'électrophorèse mettant en oeuvre l'appareil suivant la revendication 1 et dans lequel on effectue, conjointement à la séparation électrophorétique dans un gel en couche mince de forme discoïde des composants d'un mélange, la lecture de l'électrophérogramme résultant de cette séparation, comprenant les étapes suivantes:

a) on incorpore ledit mélange audit gel;

b) on relie deux portions distinctes de ce gel aux pôles respectifs d'une source de courant afin de soumettre ce gel à un champ électrique;

c) on met ce gel en rotation; et

d) on déplace de concert en regard du gel de manière à en explorer la surface soumise à l'électrophorèse, d'une part, une source (71) d'un rayonnement qu'on dirige sur lesdits composants soumis à l'électrophorèse et, d'autre part, un capteur (72) de ce rayonnement après interaction avec lesdits composants, le rayonnement ainsi recueilli par ce capteur fournissant, sous forme de signal électrique, l'information de lecture désirée.

13. Procédé suivant la revendication 12, caractérisé en ce que la rotation du gel est suffisamment rapide pour que la force centrifuge ainsi engendrée agisse sur la vitesse de migration et/ou la direction de déplacement des composants en voie de séparation.

**Patentansprüche**

1. Elektrophoresegerät zum Trennen der Komponenten einer dünnschichtigen, auf einer Unterlage befindlichen Stoffmischung, deren Bestandteile sich in einem elektrisch leitenden Milieu unter dem Einfluß eines an das Milieu angelegten elektrischen Potentials selektiv voneinander entfernen, und zum gleichzeitigen Erstellen eines lesbaren Elektrophoresediagramms, bestehend aus:

a) automatischen Mitteln (20, 21) zum Einbringen der Mischung in das aus einem scheibenförmigen Gel bestehende Milieu, welches sich in dem Hohlraum einer Form (10) für ein Dünnschichtpolymer befindet;

b) automatischen Mitteln (42, 43, 62, 63) zum Verbinden von zwei bestimmten Bereichen des Gels mit den Polen einer Stromquelle, und

c) automatischen beweglichen Mitteln (70), welche gegenüber der Form (10) in der Weise lageveränderbar sind, daß die Gesamtheit der Fläche des der Elektrophorese unterworfenen Gels erforschbar ist, wobei diese Mittel einerseits aus einer auf die der Elektrophorese ausgesetzten Bestandteile richtbaren Strahlenquelle (71) und andererseits aus einem Strahlenempfänger (72), auf welchen die Strahlen nach Passieren der Bestandteile auftreffen und welcher die empfangenen Strahlen in elektrische Signale umwandelt, durch welche die gewünschte Information lesbar gemacht wird, bestehen.

2. Elektrophoresegerät nach Anspruch 1, dadurch gekennzeichnet, daß die Form (10) im wesentlichen scheibenförmig ausgebildet ist, ein zentrales Loch (14) in der Stärke der Form (10) aufweist, welches mit dem Gel ausfüllbar ist, wenigstens einen Hohlraum (15) besitzt, welcher sich vom Zentrum zur Peripherie der Form (10) erstreckt und dessen Öffnungen (16, 17) am inneren und äußeren Rand der Form (10) münden und welche dazu dienen, mit der Stromquelle derart verbunden zu werden, um ein elektrisches Potential zwischen den Enden des Gels herzustellen.

3. Elektrophoresegerät nach Anspruch 1 oder 2, dadurch gekennzeichnet, daß Mittel (50) zum aufeinanderfolgenden Transportieren der Formen (10) von einem Vorratsstapel an einem Ort (I) zu einem zweiten Ort (II) im Gerät, an welchem die Einbringung der zu trennenden Mischung auf dem elektrophoretischen Gel erfolgt, und schließlich von diesem zu einem dritten Ort (III), an welchem die elektrophoretische Trennung in erwähnter Weise erfolgt, vorgesehen sind.

4. Elektrophoresegerät nach Anspruch 1, dadurch gekennzeichnet, daß es zusätzlich Mittel zum Formen des Gels in situ in der Form aufweist, welche aus

i) einem Motor (33), welcher die Form in Rotation versetzt,

ii) einem Flüssigkeitsverteiler (21), mittels welchem ein Monomer oder andere flüssige Vorläufer des Gels in die zentrale Öffnung der Form eingebracht werden, und zwar in der Weise, daß diese Flüssigkeit sich unter der Wirkung der Zentrifugalkraft aufgrund der Rotation verteilt und die Form ausfüllt und dann in ein Gel umgewandelt wird, bestehen.

5. Elektrophoresegerät nach Anspruch 4, dadurch gekennzeichnet, daß der Flüssigkeitsverteiler auch als Mittel (a) für das Einbringen der zu trennenden Proben in das Gel dient.

6. Elektrophoresegerät nach Anspruch 5, dadurch gekennzeichnet, daß die Mittel (a) einen in wenigstens zwei Richtungen beweglichen Arm (20) aufweisen, welcher an einem Ende mit kalibrierten Pipetten (23) bestückt ist, welche dazu dienen, von Drehung zu Drehung eine Dosis der Flüssigkeit aufzunehmen und wieder abzugeben.

7. Elektrophoresegerät nach Anspruch 1, dadurch gekennzeichnet, daß die Mittel (b) zum Anschließen des Gels an die elektrische Stromquelle aus einer elektrolytischen Lösung bestehen, welche dementsprechend zwei koaxiale Bereiche (40a, 40b) aufweist, von welchen der eine im Zentrum und der andere an der Peripherie eines Troges (40) angeordnet ist, in welchem sich die Form befindet.

8. Elektrophoresegerät nach Anspruch 1, dadurch gekennzeichnet, daß die Mittel (b) aus metallischen, mit der Stromquelle verbundenen Plättchen (62a, 62b) bestehen, von welchen ein Stück mit dem Bereich der Öffnungen der Hohlräume in der Form gekuppelt ist und in diese hineinragt.

9. Form zur Verwendung in einem Elektrophoresegerät nach Anspruch 1, dadurch gekennzeichnet, daß diese aus zwei Scheiben (11, 12) aus einem für langwellige Strahlen durchlässigen Werkstoff besteht, von welchen wenigstens eine wenigstens eine Nut (13) aufweist, welche in der Oberseite der einen Scheibe angeordnet ist und welche mit der anderen Scheibe in Kontakt steht.

10. Form nach Anspruch 9, dadurch gekennzeichnet, daß die Nut in der einen Scheibe durch Ausfräsen hergestellt ist.

11. Form nach Anspruch 9, dadurch gekennzeichnet, daß die Nut durch einen Vorsprung, welcher durch Verformung der korrespondierenden Scheibe erhalten worden ist, begrenzt ist.

12. Elektrophoreseverfahren zum Betrieb des Geräts nach Anspruch 1, bei welchem man zugleich die elektrophoretische Trennung der Bestandteile einer Mischung in einem dünnschichtigen, scheibenförmigen Gel vornimmt und das Ergebnis der Trennung mittels eines Elektrophoresediagramms lesbar darstellt, bestehend aus folgenden Arbeitsschritten:
a) man bringt die Mischung auf das Gel auf,
b) man verbindet zwei bestimmte Bereiche des Gels mit den in Betracht kommenden Polen einer elektrischen Stromquelle, um dieses Gel einem elektrischen Feld auszusetzen,
c) man versetzt dieses Gel in Rotation,
d) man verschiebt zum Zwecke der Erforschung der Oberfläche des der Elektrophorese unterworfenen Gels diesem gegenüber übereinstimmend einerseits eine Strahlenquelle (71), deren Strahlen auf die der Elektrophorese unterworfenen Bestandteile gerichtet sind, und andererseits einen Strahlenempfänger (72), der die Strahlen nach Zusammenwirken mit den getrennten Bestandteilen der Mischung empfängt und mittels elektrischer Signale die gewünschte lesbare Information liefert.

13. Verfahren nach Anspruch 12, dadurch gekennzeichnet, daß die Rotation des Gels ausreichend schnell erfolgt, damit die dadurch erzeugte Zentrifugalkraft die Wanderungsgeschwindigkeit und bzw. oder die Richtung der Verschiebung der Bestandteile im Hinblick auf deren Trennung beeinflußt.

**Claims**

1. Apparatus for separating by thin layer electrophoresis a mixture of components capable of being selectively displaced in an electrically conducting medium under the influence of an electric potential applied to the medium and for jointly reading the electropherogram resulting from electrophoresis, this apparatus comprising essentially:
a) automatic means (20, 21) for incorporating said mixture in said medium, the latter consisting of a disc-shaped gel contained in the moulding cavity of a mould (10) for thin layers of polymer;
b) automatic means (42, 43, 62, 63) for connecting two distinct portions of this gel to the poles (65) of a voltage source, and
c) automatically displaceable means (70) which move opposite said mould (10) so as to sweep the full extent of the surface of the gel subjected to electrophoresis, these means comprising firstly a source of radiation (71) which is directed at said components subjected to electrophoresis and, secondly, a sensor (72) for this radiation after interaction with said components, the radiation collected by the sensor furnishing desired metrical information in the form of an electric signal.

2. Apparatus according to claim 1, characterized by the fact that the mould (10) has a general disc-like shape, that it has a hole (14) in its centre and carries, disposed within its thickness and filled with the said gel, at least one cavity (15) which extends from the centre of the mould to the periphery thereof and the openings of which (16, 17) which open respectively on the inner and outer edges of the mould, are adapted for connection to said voltage source so as to establish said electric potential between the ends of the gel.

3. Apparatus according to claims 1 or 2, characterized by the fact that it comprises means (50) for successively transporting the mould from a stockpiled position (I) to a second station (II) of the apparatus where the mixture to be separated is incorporated in the electrophoretic gel, and then to a third station (III) where the electrophoretic separation properly so called takes place.

4. Apparatus according to claim 1, characterized by the fact that it additionally comprises means for moulding the gel in situ within the mould, these means including:

(i) a motor (33) for setting the mould in rotation;

(ii) a liquid dispenser (21) for introducing a monomer or other liquid precursor of the gel through the central opening of the mould, so that this liquid is displaced and fills the mould under the influence of the centrifugal force due to the rotation, and it is converted into a gel after the mould has been filled.

5. Apparatus according to claim 4, characterized by the fact that said liquid dispenser is likewise provided as means (a) for incorporating in the gel the sample to be separated.

6. Apparatus according to claim 5, characterized by the fact that these means (a) comprise an arm (20) which is movable in at least two dimensions of space, equipped with calibrated pipettes (23) and adapted for, successively, aspirating and delivering a known dose of liquid repetitively.

7. Apparatus according to claim 1, characterized by the fact that the means (b) for connecting the gel to the source of electric voltage consist of buffered electrolyte solutions which are contained in two coaxial zones (40a, 40b), respectively, in which the mould is immersed, one said zone being central and the other peripheral to a vat (40).

8. Apparatus according to claim 1, characterized by the fact that the means (b) comprise metallic strips (62a, 62b) matched to the section of the opening of the mould cavities and inserted in said openings, these strips being connected to the voltage source.

9. Mould suitable for the apparatus according to claim 1, characterized by the fact that it is formed by assembly of two disc-plates (11, 12) of material which is permeable to radiation of a predetermined wavelength, at least one of these plates presenting at least one groove (13) provided on its face contacting the other plate.

10. Mould according to claim 9, characterized by the fact that said groove is made by machining.

11. Mould according to claim 9, characterized by the fact that said groove is defined by a development obtained by shaping the relevant plate.

12. A process of electrophoresis involving the apparatus of claim 1, in which the reading of the electropherogram resulting from electrophoresis is read jointly with the carrying out of the electrophoretic separation of the components of a mixture in a disc-shaped thin gel, this process comprising the following steps:

a) said mixture is incorporated to said gel;

b) two given portions of this gel are connected to the respective terminals of a voltage source so that the gel is subjected to an electric field;

c) the gel is driven in rotation; and

d) a source (71) of a radiation directed to said components subjected to electrophoresis and a probe (72) for collecting the radiation after interaction with said components which works in registration with the source are moved opposite the gel so as to sweep the surface thereof subjected to electrophoresis, the radiation collected by the probe providing the desired metrical information in the form of an electrical signal.

13. Process according to claim 12, characterized by the fact that the spinning of the gel is fast enough for generating a centrifugal force which influences the migration velocity and/or the displacement direction of the components subjected to separation.

*FIG. I*

FIG. 2a

FIG. 2b

FIG. 3

FIG. 4

FIG. 5

FIG. 6